# EUROPEAN PATENT APPLICATION

(11) **EP 0 713 745 A1**
(43) Date of publication of application: **29.05.1996**
(21) Application number: 95307924.1
(22) Date of filing: 06.11.1995
(51) Int. Cl.: B23K 26/14, B23K 26/02

(54) **A method and apparatus for producing apertured components**

(30) Priority: 15.11.1994 GB 9422987
(71) Applicant: ROLLS-ROYCE plc, London, SW1E 6AT (GB)
(72) Inventor: Johnson, Thomas Kenneth, Downend, Bristol BS16 6DS (GB); Osman, John Michael, Yate, Bristol BS17 4EY (GB)
(74) Representative: Bird, Vivian John

(57) **Abstract**

A laser drilling machine comprises a laser nozzle and a closed loop feedback control system for controlling a laser beam which is focused through the nozzle onto the surface of a component. The control system includes a pressure sensor which measures the pressure of a stream of oxygen passing through the nozzle, and a control unit which contains a relationship between oxygen gas stream back pressure and size of hole produced. During the drilling process hole size is determined from measured values of gas stream back pressure and adjustments are made to the laser beam control parameters. The method and apparatus provide for the production of critically toleranced apertures, for example, cooling holes in gas turbine components.

## Description

This invention relates to a method and apparatus for producing apertured components. In particular the invention concerns improvements relating to the production of cooling holes in gas turbine engine components using laser drilling apparatus.

The performance of a gas turbine engine is largely dependent upon its operating temperature. In most modern applications operational gas stream temperatures exceed the melting point of the engine's turbine components. Such high temperature operation is possible provided the engine components are adequately cooled.

One method by which engine components are cooled is surface cooling wherein a flow of cooling air is provided over the surface of a component. Typically cooling holes are provided for communicating cooling flow from a cool air supply on one side of the component to a surface on the other side of the component which is exposed to the direct effects of the gas stream temperature.

The shape, size and disposition of the cooling holes are of paramount importance for efficient cooling, and one method of producing holes of the required accuracy is laser drilling.

Laser drilling is effected by directing a laser beam through a nozzle onto the surface of a component together with a high pressure oxygen supply. The laser beam is focused at a point on the component surface so that the heat energy dissipated at the focal point vapourises component material. Pulses of laser energy systematically remove material from the component until a cooling hole is formed.

Since the number and intensity of such pulses determine the size of hole produced it is possible to exercise a great deal of control during the laser drilling process. Despite this, however, there is still a requirement to dimensionally inspect components, or samples of components, following laser drilling operations. It is currently the practice to inspect such components after the drilling operation is complete and to discard those components which have hole sizes outside predetermined tolerance limits. This is both a time consuming and wasteful process.

In-process inspection and control systems are known which overcome some of the above drawbacks by using known optical measurement principles to determine hole size between laser drilling steps. A disadvantage with these systems, however, is that they require dedicated manipulative systems for positioning the optical inspection means during the inspection process. This, of course, adds to the cost and complexity of the laser drilling apparatus.

The present invention has, therefore, for a first objective a method of producing an aperture in a component which overcomes the above drawbacks, and for a second objective, the provision of apparatus for producing an aperture in a component in accordance with that method.

According to a first aspect of the invention there is provided a method of producing an aperture in a component using an aperture forming device, the method comprising the steps of,
a) actuating the aperture forming device to produce an aperture in the component in accordance with an initial set of control parameters,
b) determining the size of the aperture formed by measuring the back pressure of a stream of pressurised fluid applied through the aperture,
c) comparing the measured value with a predetermined value representative of the desired aperture size,
d) adjusting the control parameters of the aperture forming device in accordance with the comparison
e) actuating the aperture forming device to modify the aperture in accordance with the adjusted control parameters, and
f) repeating steps b to e until the aperture size is within predetermined limits.

Preferably the aperture forming device is a laser drilling machine and the aperture is formed by directing a laser beam onto the surface of the component through a laser drilling nozzle.

The pressurised fluid is preferably directed to the aperture through the laser drilling nozzle, and the pressurised fluid is the pressurised gaseous oxygen used in the laser drilling process.

Preferably the control parameters comprise laser intensity and quantity of pulses.

Also the method may include the preliminary step of determining the relationship between pressurised fluid back pressure and aperture size, and storing the relationship in a data storage and retrieval system for access during step c.

According to a second aspect of the invention there is provided apparatus for producing an aperture in a component comprising an aperture forming device and means for controlling the aperture forming device in accordance with a set of aperture forming control parameters, said means including a control for generating an initial set of control parameters, and feed back control means for generating a closed loop feed back control signal representative of the size of aperture produced, the control being adapted to compare the measured value with a predetermined value representative of desired aperture size, and to adjust the control parameters in accordance with the comparison until the size of the aperture being formed is within predetermined limits, whereby the feed back control comprises a pressure sensor for generating a feedback control signal representative of the gas stream back pressure of a pressurised fluid applied to the aperture.

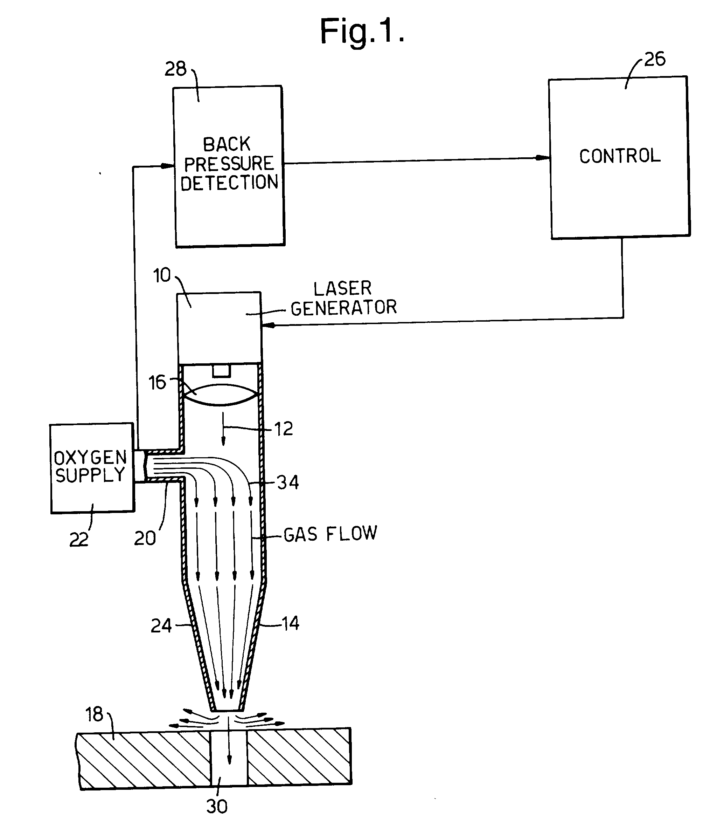

The invention will now be described in greater detail, by way of example only, with reference to the apparatus shown in the accompanying schematic drawing (Figure 1).

in Figure 1 there is shown a laser generator 10 for generating a laser beam 12, a laser nozzle 14 aligned with the laser beam 12, and a lens system 16 for focusing the beam through the nozzle 14 onto the surface of a component 18. The nozzle includes an inlet 20 which communicates with a pressurised oxygen supply 22, and a convergent outlet 24 for discharging a pressurised stream of gaseous oxygen onto the surface of the component 18. The apparatus also includes a control unit 26 for operational control of the laser generator 10 during laser drilling operations. A functional relationship between desired hole size, laser beam focus, laser pulse intensity and number of pulses necessary to produce a hole of such dimension is stored in the control unit 26. This relationship may be stored as a database in a data storage and retrieval system, or alternatively as an algorithm in a microprocessor component of the control unit 26.

In accordance with the invention a pressure sensor 28 is provided for closed loop feedback control of the laser generator. The pressure sensor 28 is positioned between the control unit 28 and the nozzle inlet 20 for generating a feedback control signal representative of oxygen gas stream back pressure.

Prior to use the apparatus is calibrated to establish a relationship between gas stream back pressure and drilled hole size. This relationship may be obtained by positioning the laser nozzle over holes formed in a calibration test-piece and exposing the holes to the oxygen supply. Once established the relationship is stored in the control unit 26 for access during laser drilling operations. In common with the desired hole size/laser control parameter relationship mentioned above, this relationship is stored as a database in a data storage and retrieval system, or as an algorithm.

In use, the apparatus is used to produce a hole 30, or series of holes 30, in component 18. In a known manner, the laser beam 12 and oxygen gas steam 34 interact to drill holes 30 in the component 18 as and where required. The control unit 26 is programmed so that each hole 30 is produced in accordance with a desired diameter.

Initially, the control unit 26 sets the laser beam focus, laser pulse intensity and pulse quantity control parameters in accordance with the established pre-determined relationship. The control then modifies these parameters such that for each drilling operation an undersize hole is produced.

Once the laser beam penetrates the component the laser beam is deactivated and the drilling operation temporarily halted. This event may be detected by the sudden change in gas stream back pressure as the gas stream begins to pass through the hole produced in the component. While the drilling process is halted the oxygen gas stream 34 continues to flow from the laser nozzle outlet and through the apertured component 18. Because part of the gas stream passes through the component there is an associated reduction in back pressure. This value is measured by the pressure sensor 28 which generates a feedback signal representative of the measured value for input to the control 26.

This signal is processed in the control unit 26 using the back pressure/hole size relationship determined during calibration. This relationship is used to convert the back pressure input signal to the size of hole produced. The measured value is then compared with a desired value of hole size. The difference, if any, is then used to adjust or reset the laser control parameters for subsequent hole enlargement. The laser drilling process is repeated until the size of hole being formed is within predetermined tolerance limits.

The above procedure is followed for each drilling operation.

It will be seen therefore that the invention enables components to be produced with holes of extremely close tolerances. By using existing laser nozzles in the manner described it will be seen also that the invention provides a method for in-process hole size measurement which minimises delay between material removal steps.

Although described in relation to laser drilling components the principle of the invention could also be applied to other aperture forming methods. For example, the invention could be applied in relation to Electro Discharge Machining, where instead of measuring a gas stream back pressure, the back pressure of di-electric fluid passing through an aperture so formed would be measured.

## Claims

1. A method of producing an aperture in a component using a laser drilling machine, the method comprising the steps of, actuating the laser drilling machine to produce an aperture in the component in accordance with an initial set of control parameters by directing a laser beam onto the surface of the component thorugh a laser driling nozzle, determining the size of the aperture formed by measuring the back pressure of a stream of pressurised fluid conducted to the aperture, comparing the measured value with a predetermined value representative of the desired aperture size, adjusting the control parameters of the aperture forming device in accordance with the comparison, actuating the aperture forming device to modify the aperture in accordance with the adjusted control parameters, characterised in that the stream of pressurised fluid is conducted to the aperture being formed through the laser driling nozzle and the steps of the method are repeated until the aperture size is within predetermined limits.

2. A method according to claim 1 wherein the pressurised fluid is the pressurised gaseous oxygen used in the laser drilling process.

3. A method according to claims 1 and 2 wherein the control parameters comprise laser intensity and quantity of pulses.

4. A method according to any preceding claim including a preliminary step of determining the relationship between pressurised fluid back pressure and aperture size, and storing the relationship in a data storage and retrieval system for access during the method steps.

5. Apparatus for producing an aperture in a component comprising a laser drilling machine having a laser drilling nozzle for directing a laser beam onto the surface of the component for forming an aperture in the component and means for controlling the laser drillng machine in accordance with a set of aperture forming control parameters, said means including a control for generating an initial set of control parameters, and feed back control means for generating a closed loop feed back control signal representative of the size of aperture produced, the control being adapted to compare the measured value with a predetermined value representative of desired aperture size, and to adjust the control parameters in accordance with the comparison until the size of the aperture being formed is within predetermined limits, characterised in that a stream of pressurised fluid is conducted through the laser drilling nozzle and directed at the aperture being formed in the component, and the feed back control includes a pressure sensing means for generating a feedback control signal representative of back pressure in the stream of pressurised fluid at the nozzle aperture.

6. Apparatus according to claim 5 wherein the pressurised fluid in the pressurised gaseous oxygen used in the laser drilling process.

7. Apparatus according to claims 5 and 6 wherein the control parameters comprise laser intensity and quantity of pulses.

8. Apparatus according to claims 5 to 7 wherein a predetermined relationship between desired hole size, and the laser beam control parameters is stored in the control.

9. Apparatus according to claims 5 to 8 wherein a predetermined relationship between gas stream back pressure and aperture size is stored in the control.
